# EUROPEAN PATENT APPLICATION

(11) **EP 4 155 974 A1**
(43) Date of publication of application: **29.03.2023**
(21) Application number: 21863730.4
(22) Date of filing: 06.09.2021
(51) Int. Cl.: G06F 16/36

(54) **KNOWLEDGE GRAPH CONSTRUCTION METHOD AND APPARATUS, CHECK METHOD AND STORAGE MEDIUM**

(30) Priority: 07.09.2020 CN 202010930320
(71) Applicant: ZTE Corporation, Shenzhen, Guangdong 518057 (CN)
(72) Inventor: PENG, Yong, Shenzhen, Guangdong 518057 (CN)
(74) Representative: Zoli, Filippo
(86) International application number: PCT/CN2021/116778
(87) International publication number: WO 2022/048668

(57) **Abstract**

A knowledge graph construction method and apparatus, a check method and a storage medium. A knowledge graph construction method for a network device, comprising: acquiring configuration data of a network device (201); preprocessing the configuration data to obtain a device classification data set (202); classifying configuration scenarios according to the device classification data set, and performing knowledge extraction on the classified configuration scenarios to obtain a configuration scenario data set (203); and extracting an entity relationship of the configuration scenario data set according to the device type and device role, and constructing a knowledge graph according to the entity relationship (204).

## Description

### CROSS-REFERENCE TO RELATED APPLICATION

This application is filed on the basis of Chinese patent application No. 202010930320.2 filed September 7, 2020, and claims priority to the Chinese patent application, the entire contents of which are incorporated herein by reference.

### TECHNICAL FIELD

The present disclosure relates to the technical field of artificial intelligence, and in particular, to a method and apparatus for constructing a knowledge graph, a check method and apparatus, and a storage medium.

### BACKGROUND

During the on-boarding and service provisioning of network devices, generally various configuration commands need to be delivered to the devices. These configuration commands include basic configuration (such as user information), port configuration (such as physical port, VLAN port, etc.), protocol configuration (such as IBGP, OSPF, etc.) and various service configurations (such as tunnels, pseudowires, L2VPN, L3VPN, etc.). Some of these configuration commands have to be completed manually, and errors may occur due to some reasons (such as the technical level of business personnel, operational standardization, etc.) during the configuration setting process. The network device itself provides a certain configuration checking mechanism, which can detect some obvious incorrect configurations, but there are still some incorrect configurations that are not detected and are delivered to the device.

In addition, due to the wide variety and large quantity of existing network devices and the wide variety of customer services, it takes a lot of manpower and time to detect whether the configurations of all the devices are correct. At present, commonly used configuration checking methods are mainly a type of inspection system based on inspection rules. This type of system lacks universality and flexibility, because an inspection tool for a network of a certain region or operator are not applicable to networks of other regions or operators. The on-boarding of new devices and new services also requires the development of a new inspection system. Further, whether the inspection results of the inspection tools are accurate or not depends almost entirely on the operation and maintenance experience, and therefore there is a high probability that unknown configuration errors cannot be identified.

Incorrect configurations in devices may affect service quality and user experience, or cause service interruptions under certain circumstances, and may even threaten the stable operation of the network. Therefore, it is necessary to provide a configuration checking method to find configuration errors and correct them in a timely manner to eliminate potential risks.

### SUMMARY

Embodiments of the present disclosure provide a method and apparatus for constructing a knowledge graph for a network device, a method and apparatus for checking a network device based on the knowledge graph, an electronic device, and a storage medium.

An embodiment of the present disclosure provides a method for constructing a knowledge graph for a network device. The method includes: acquiring configuration data of a network device; preprocessing the configuration data to obtain a device classification data set; classifying configuration scenarios according to the device classification data set, and performing knowledge extraction on the classified configuration scenarios to obtain a configuration scenario data set; and extracting an entity relation of the configuration scenario data set according to a device type and a device role, and constructing a knowledge graph according to the entity relation.

An embodiment of the present disclosure further provides a method for checking a network device based on a knowledge graph. The method includes: hierarchically extracting a to-be-checked configuration script of a network device; establishing a configuration command mapping relation according to the extracted to-be-checked configuration script, to obtain a configuration command field; searching the configuration command field in the knowledge graph to obtain a search result; and checking the network device according to the search result, where the knowledge graph is constructed according to the foregoing method for constructing a knowledge graph for a network device.

An embodiment of the present disclosure further provides an apparatus for constructing a knowledge graph for a network device. The apparatus includes: a configuration acquisition module, configured to acquire configuration data of a network device; a preprocessing module, configured to preprocess the configuration data to obtain a device classification data set; a knowledge extraction module, configured to classify configuration scenarios according to the device classification data set, and perform knowledge extraction on the classified configuration scenarios to obtain a configuration scenario data set; and a knowledge graph construction module, configured to extract an entity relation of the configuration scenario data set according to a device type and a device role, and construct a knowledge graph according to the entity relation.

An embodiment of the present disclosure further provides an apparatus for checking a network device based on a knowledge graph, which can implement the method for checking a network device based on a knowledge graph. The apparatus includes: a hierarchical extraction module, configured to hierarchically extract a to-be-checked configuration script of a network device; a mapping module, configured to establish a configuration command mapping relation according to the extracted to-be-checked configuration script, to obtain a configuration command field; a search module, configured to search the configuration command field in the knowledge graph to obtain a search result; and a checking module, configured to check the network device according to the search result, where the knowledge graph is constructed according to the foregoing method for constructing a knowledge graph for a network device.

An embodiment of the present disclosure further provides a computer-readable storage medium storing a computer-executable instruction which, when executed by a computer, causes the computer to implement the foregoing method for constructing a knowledge graph for a network device or the foregoing method for checking a network device based on a knowledge graph.

### BRIEF DESCRIPTION OF DRAWINGS

FIG. 1 is a schematic diagram of a triplet.
FIG. 2 is a schematic diagram of an application scenario of a method for checking a network device based on a knowledge graph according to an embodiment of the present disclosure.
FIG. 3 is a schematic diagram of another application scenario of a method for checking a network device based on a knowledge graph according to an embodiment of the present disclosure.
FIG. 4 is a flowchart of a method for constructing a knowledge graph for a network device according to an embodiment of the present disclosure.
FIG. 5 is a flowchart of step 202 in FIG. 4.
FIG. 6 is a schematic diagram of an application scenario of step 202 in FIG. 4.
FIG. 7 is a schematic diagram of an application scenario of step 203 in FIG. 4.
FIG. 8 is a schematic diagram of another application scenario of step 203 in FIG. 4.
FIG. 9 is a diagram showing a mapping relation between configuration commands according to an embodiment of the present disclosure.
FIG. 10 is a flowchart of a method for checking a network device based on a knowledge graph according to an embodiment of the present disclosure.

### DETAILED DESCRIPTION

Objectives, technical schemes and advantages of the present disclosure will be clearer from a detailed description of embodiments of the present disclosure in conjunction with the accompanying drawings and embodiments. It should be understood that the specific embodiments described herein are merely used for illustrating the present disclosure, and are not construed to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

Unless otherwise defined, meanings of all technical and scientific terms used in this description are the same as those usually understood by those having ordinary skills in the art to which the present disclosure belongs. Terms used in this description are merely used to describe objectives of the embodiments of the present disclosure, and are not construed to limit the present disclosure.

First, several terms involved in the present disclosure are illustrated.

Knowledge graph: It describes concepts, entities and their relations in the objective world in a structured form, so that computers can well manage, compute and understand the massive information on the Internet. Generally, structured knowledge is expressed in the form of a graph. A knowledge graph is essentially a large-scale semantic network, which aims to describe concepts, entities, events, and their relations in the objective world. By taking entities as nodes and relations between the entities as edges, knowledge graphs provide a way to see the world from the perspective of relations. At present, the integration of knowledge graphs and machine learning, as a hot direction of artificial intelligence development, is widely used in search, recommendation, question answering, interpretation and decision-making processes. The construction of a knowledge graph mainly includes: knowledge acquisition, knowledge extraction, knowledge fusion, knowledge storage, knowledge modeling and knowledge reasoning.

Entity: It refers to an object that is distinguishable and exists independently, e.g., a person, a commodity, etc. Everything in the world is composed of a plurality of concrete objects, and each of the plurality of concrete objects is an entity. Entities are the most basic elements in knowledge graphs. Different relations exist between different entities.

Property: It points from an entity to a property value of the entity. The property value mainly refers to a property of a specified affiliate of an object. Different properties may be defined in an entity. Alternatively, each property may be defined as one entity, and different properties are connected by different edges.

Relation: It is used to express an abstract relation between entities. This abstract connection is also called an edge between entities in the knowledge graph.

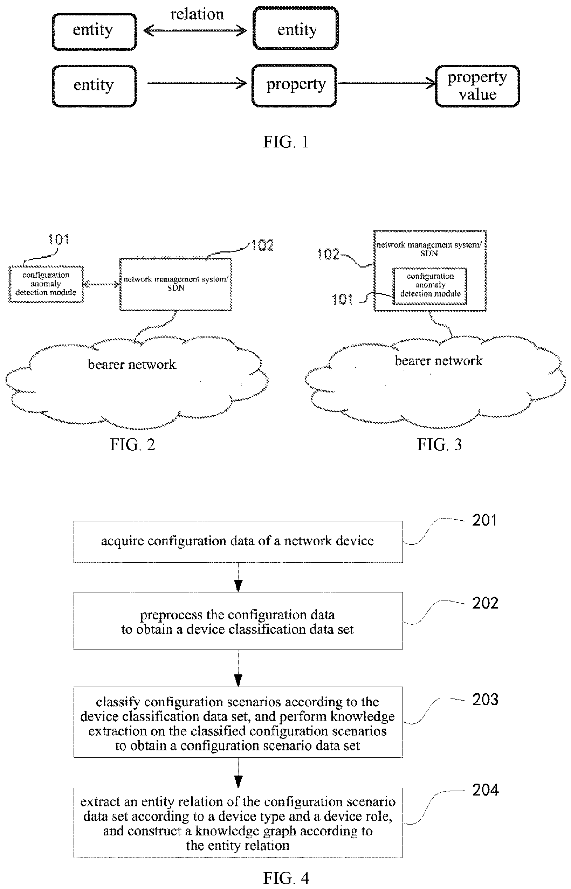

Triplet: Referring to FIG. 1, there are mainly two forms to express a triplet. The first form is "entity-relation-entity," while the second form is "entity-property-property value." Information is formed into a path (graph_path) through a triplet. Different entities are associated by the structural path of the triplet, so that the relation between different entities can be expressed in a more intuitive and interpretable way, making it easier for people to understand the relation between different entities. The second form of expression is described in the embodiments of the present disclosure.

Network management system: It is used for managing and maintaining base station devices, and can be used to manage network devices, e.g., managing a running status of a network device, including real-time monitoring of the running status of the network device.

Existing network device: It refers to a currently running network device.

Network device management platform: It refers to a platform for managing user manuals, including Standard Operation Procedure (SOP) documents.

The schemes provided in the embodiments of the present disclosure relate to a method and apparatus for constructing a knowledge graph for a network device, a method and apparatus for checking a network device based on a knowledge graph, an electronic device, and a storage medium, which will be described in detail through the following embodiments. The method for constructing a knowledge graph for a network device in the embodiments of the present disclosure is described first.

The method for constructing a knowledge graph for a network device provided in the embodiments of the present disclosure can be applied to a network device having a function of delivering a property configuration command that has a relatively fixed syntax structure or fixed rule. Configuration data can be easily acquired from the network device, and the configuration data can be exported in batches as text files with a certain format or syntax structure. A network management system or a Software Defined Network (SDN) controller of a network can obtain a device type and role of the device, and export configuration files corresponding to the device type in batches.

The method for constructing a knowledge graph for a network device provided in the embodiments of the present disclosure can be applied to a terminal device or a server, or a software running in a terminal device or a server. In some embodiments, the terminal device may be a smartphone, a tablet computer, a notebook computer, a desktop computer, a smartwatch, or the like. The server may be configured as an independent physical server, a server cluster or distributed system including a plurality of physical servers, or a cloud server providing basic cloud computing services, such as cloud service, cloud database, cloud computing, cloud function, cloud storage, network service, cloud communication, middleware service, domain name service, security service, Content Delivery Network (CDN), big data, and an artificial intelligence platform. The software can implement the method for constructing a knowledge graph for a network device. However, the present disclosure is not limited to the above forms.

FIG. 2 and FIG. 3 are each a schematic diagram of an application scenario of the embodiments of the present disclosure. A network device according to an embodiment of the present disclosure includes: a configuration anomaly detection module 101 and a network management system or SDN controller 102. It should be noted that, in practical applications, the configuration data related to the device may be acquired through the network management system or SDN controller 102 as required. How to acquire the configuration data related to the device is not limited in the embodiments of the present disclosure. The configuration data related to the device may be acquired through the network management system, or may be acquired through the SDN controller. The configuration data includes a device type or device role, such that a configuration knowledge graph corresponding to the device can be found more accurately, and then a configuration script can be checked.

In some embodiments, an architecture of the network device may be in either of two forms. An architecture shown in FIG. 2 is a first architecture form of the network device, where the configuration anomaly detection module 101 can be independent of the network management system or SDN controller 102. An architecture shown in FIG. 3 is a second architecture form of the network device, where the configuration anomaly detection module 101 can be built in the network management system or SDN controller 102. The network management system or SDN controller 102 performs network communication with a bearer network.

FIG. 4 is a flowchart of a method for constructing a knowledge graph for a network device according to an embodiment of the present disclosure. The method in FIG. 4 includes steps 201 to 204.

At step 201, configuration data of a network device is acquired.

At step 202, the configuration data is preprocessed to obtain a device classification data set.

At step 203, configuration scenarios are classified according to the device classification data set, and knowledge extraction is performed on the classified configuration scenarios to obtain a configuration scenario data set.

At step 204, an entity relation of the configuration scenario data set is extracted according to a device type and a device role, and a knowledge graph is constructed according to the entity relation.

In some embodiments, in order to collect configuration data of various device types, step 201 includes: acquiring configuration data of a specified network device from an existing network device. The existing network device refers to a currently running network device. The specified network device refers to a network device of a specific device type. The configuration data is a configuration script of the network device. The configuration data includes configuration commands. The configuration data is presented in the form of text, and the configuration data in the text form has a fixed syntax or a clear rule description. The configuration data can reflect a corresponding device type or device role, and therefore can be used for distinguishing from other device types or other device roles. The device type is a specific model of the device, and the network device of the specific device type refers to a network device with a specific model. Devices of different types have different device roles in the network, such as access layer devices, aggregation layer devices, core layer devices, etc. Generally, devices of different device types have different configurations, i.e., different configuration data, and an identical device also has different configurations when playing different device roles.

In practical applications, information that can reflect the device type or device role can be clearly specified in a command in the configuration data, or collected through the network management system or SDN controller. It should be noted that the configuration data related to the device may be collected through the network management system or SDN controller as required. How to collect the configuration data related to the device is not limited in the embodiments of the present disclosure. The configuration data related to the device may be acquired through the network management system, or may be acquired through the SDN controller.

In the embodiments of the present disclosure, the network management system or the SDN controller of the network device is used to obtain the configuration data related to the device, and the configuration data includes a device type or device role, so that a configuration knowledge graph corresponding to the device can be found accurately, and then a configuration script can be checked. The device type is a specific model of the device. Devices of different types have different device roles in the network, such as access layer devices, aggregation layer devices, core layer devices, etc. Generally, devices of different device types have different configurations, i.e., different configuration data, and an identical device also has different configurations when playing different device roles.

At step 202, because the configuration data includes configuration commands, the obtained sample data set of device classification includes a plurality of configuration commands.

In some embodiments, the preprocessing of the configuration data at step 202 includes standardization processing of the configuration commands and cleaning processing of the configuration commands. At step 202, a configuration script acquired from the network device is analyzed. Because different configuration commands have different configuration parameters in different scenarios but have an identical command function, these configuration commands having an identical command function but only different parameters can be preprocessed. At step 202, a standard configuration manual is acquired from a network device management platform. A large number of standard configuration commands are extracted from the standard configuration manual. A command parser is constructed using these standard configuration commands, and the configuration commands in the configuration script are standardized using the command parser. Therefore, a variety of configuration commands with different parameters can be expressed by an identical standard command, to facilitate subsequent knowledge extraction (step 203), knowledge graph modeling (step 204), knowledge graph storage, and configuration anomaly detection for the network device.

In order to obtain more accurate configuration commands and make the obtained data more accurate, in the embodiments of the present disclosure, a data mining algorithm is used to extract configuration commands from a large number of configuration files.

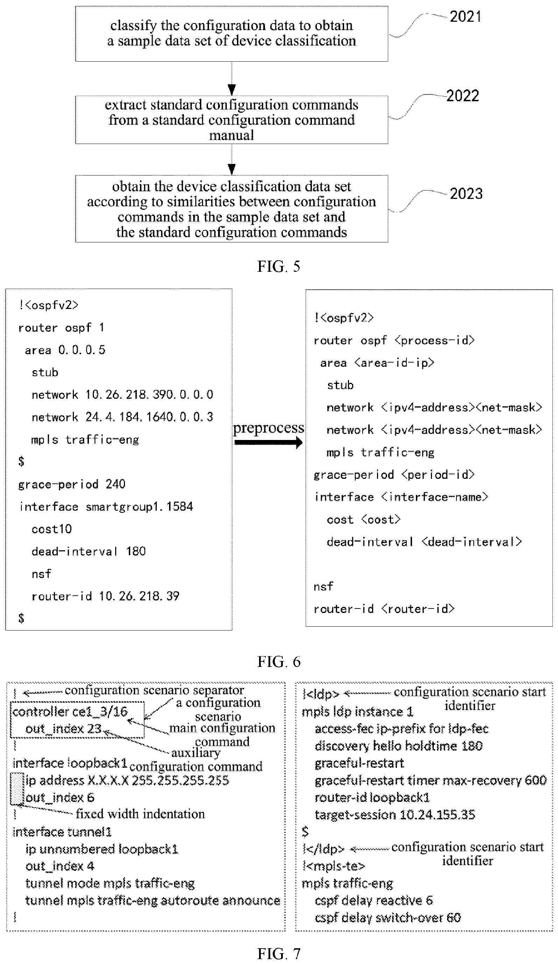

Referring to FIG. 5, in some embodiments, step 202 includes the following steps.

At step 2021, the configuration data is classified to obtain a sample data set of device classification.

At step 2022, a standard configuration command is extracted from a standard configuration command manual.

At step 2023, the device classification data set is obtained according to similarities between the configuration command in the sample data set and the standard configuration command.

In an embodiment, at step 2021, the configuration data can be classified according to a device type to obtain a sample data set S0 of device classification. In some other embodiments, the configuration data can be classified in other manners, which are not limited in the embodiments of the present disclosure. In some embodiments, all configuration scripts are used to classify the configuration data according to the device type or device role to obtain the sample data set S0 of device classification. The device type is a specific model of the device. Devices of different types have different device roles in the network, such as access layer devices, aggregation layer devices, core layer devices, etc. Generally, devices of different device types have different configurations, i.e., different configuration data, and an identical device also has different configurations when playing different device roles.

In an embodiment, step 2022 includes the following steps.

A standard configuration manual is acquired from a network device management platform.

A standard configuration command is extracted from the standard configuration manual.

Because the standard configuration manual includes a large number of configuration files, i.e., a large number of configuration scripts, a large number of standard configuration commands can be extracted. In some embodiments, the standard configuration commands are extracted from a large number of configuration files using a data mining algorithm, so that more accurate configuration data can be obtained.

In some embodiments, step 2023 includes the following steps.

A command parser id constructed according to the standard configuration commands.

Similarities between the configuration commands in the sample data set and the standard configuration commands of the command parser is calculated.

The standard configuration command with the highest similarity is selected as the device classification data set.

At step 2022, classification and construction are performed according to the standard configuration commands to obtain a command parser. In practical applications, similarities between each line of configuration commands in the configuration script of the sample data set S0 and the standard commands in the command parser can be calculated, and the standard command with the highest similarity is selected as a post-parsing standard configuration command and used as a device classification data set S1.

In order to obtain more accurate standard configuration commands, in practical applications, the method for constructing a knowledge graph for a network device further includes the following steps.

The configuration commands of the configuration data is filtered. In practical applications, configuration commands of some configuration data irrelevant to network services need to be filtered out to obtain more accurate standard configuration commands, thereby obtaining the device classification data set S1 in a standard configuration command format for classifying devices.

Referring to FIG. 6, in a specific application scenario, original configuration data is preprocessed to obtain a standard configuration command, and the configuration command irrelevant to network services has also been filtered out.

In an embodiment, step 203 includes the following steps.

The configuration scenarios from the device classification data set are classified according to a preset classification mode to obtain classified configuration scenarios, where the preset classification mode includes a preset segmentation method and a preset script rule.

The knowledge extraction is performed on the classified configuration scenarios according to a hierarchical relation to obtain the configuration scenario data set.

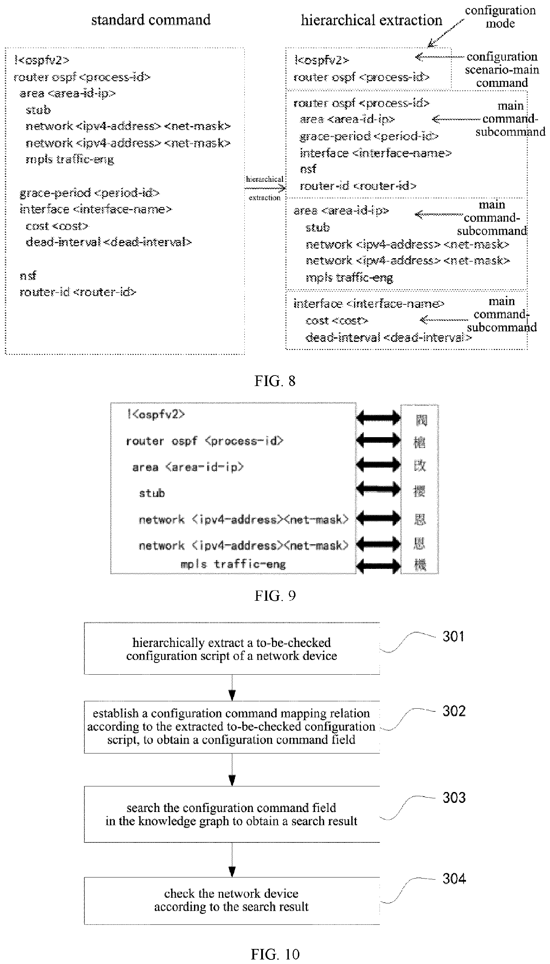

At step 203, the configuration scenarios from the device classification data set S1 are classified according to the preset segmentation method and the preset script rule. The preset segmentation method can be set as a specific segmentation method of the configuration scenario, and the preset script rule can be set as a specific script rule of the configuration scenario. The classification mode varies slightly for different device types, and the difference mainly lies in different configuration scenario separators. A configuration scenario generally includes a plurality of lines of configuration commands that appear in succession in a configuration text. In a configuration text, one configuration scenario is generally separated from another configuration scenario by a blank line or a specific identifier. Configuration commands in a configuration scenario may be displayed with different indentation widths in the configuration text, indicating that two commands in succession have a main command-subcommand relation and that the subcommand assists the main command in achieving a specific configuration function. A detailed description will be given below in conjunction with FIG. 7, FIG. 8, Table 1 and Table 2.

In a practical application, configuration script formats of two different device types are used for description. Refer to FIG. 7 for details. FIG. 7 is a schematic diagram of division of different configuration scenarios. FIG. 7 illustrates configuration scenario command rules of two different device types. Referring to Table 1, a configuration scenario start identifier includes a configuration scenario separator and another command. For example, in an example where the configuration scenario start identifier is "!</1dp>", the configuration scenario separator is the exclamation mark "!", and the other command is </1dp>, i.e., the configuration scenario separator "!" and the other command "</1dp>" constitute the configuration scenario start identifier "!</1dp>". The configuration scenario includes a main configuration command and an auxiliary configuration command. The main configuration command "controller ce1_3/16" and the auxiliary configuration command "out_index 23" together constitute the configuration scenario: controller ce1_3/16
out_index 23.

**Table 1**

| Identifier | | Example |
|---|---|---|
| Configuration scenario start identifier | Configuration scenario separator | ! |
| | Other command | <1dp> or </1dp> |
| Configuration scenario | Main configuration command | controller ce1_3/16 |
| | Auxiliary configuration command | out_index 23 |

Referring to FIG. 8, FIG. 8 shows a configuration command after hierarchical extraction. FIG. 8 illustrates results of extraction performed on two hierarchical relations. Referring to Table 2, a first hierarchical relation, i.e., a first configuration mode, is based on commands at an identical level. For example, a configuration scenario "!<ospfv2>" and a main command "router ospf<process-id>" are commands at the identical level. A second hierarchical relation, i.e., a second configuration mode, is based on commands of a current level and a next level, for example, a main command "area <area-id-ip>" and a subcommand of the next level of the main command:
stub
network<ipv4-addres s > <net-mask>
network<ipv4-addres s > <net-mask>
mpls traffic-eng

**Table 2**

| Configuration mode | | Example |
|---|---|---|
| First configuration | Configuration scenario | ! <ospfv2> |
| mode | Main command | router ospf <process-id> |
| Second configuration | Main command | area <area-id-ip> |
| mode | Subcommand | stub network<ipv4-address > < net-mask> |
| | | network<ipv4-address><net-mask> mpls traffic-eng |

When the knowledge extraction is performed on the classified configuration scenarios according to the hierarchical relation at step 203, the classified configuration scenarios in the device classification data set S1 are extracted according to the hierarchical relation. In an embodiment, there are two hierarchical relations. A first hierarchical relation is a relation between commands at an dentical level, i.e., a configuration scenario start command and a command at the identical level as the configuration scenario start command, where level refers to that commands indented by different units compared to the initial command are at different levels, and thus a hierarchical relation of configuration scenario-main command is obtained. A second hierarchical relation is a relation between a command and its next-level command, i.e., the next-level command is more indented compared to the command, and thus a hierarchical relation of main command-subcommand is obtained. As shown in FIG. 7, a subcommand "ap address X.X.X.X 255.255.255.255Y" and a subcommand "out_index6" are indented by a fixed width, respectively. Reference may be made to the schematic diagrams in FIG. 6 to FIG. 8. The extracted configuration command with a hierarchical relation is called a configuration mode, so that a configuration scenario data set S2 based on device classification is obtained.

In some embodiments, at step 203, association analysis and extraction of all configuration modes in the device classification data set S1 are performed using a big data mining algorithm. By adjusting a preset threshold of a frequent itemset in the association analysis (the number of times a certain configuration pattern appears in the sample), configuration modes with different frequencies of appearance in the sample data are obtained, and the configuration mode having a frequency of appearance higher than the preset threshold is determined as a correct standard configuration mode. By using the big data mining algorithm to extract configuration commands from a large number of configuration files, there are different combination relations between configuration commands in different configuration scenarios, and the different configuration scenarios are segmented by specific scenario separators in the configuration files. There may also be multiple levels of configuration commands in one configuration scenario. The configuration commands at different levels are extracted by constructing a hierarchical model of scenario command-main command and a hierarchical model of main command-subcommand. In this way, a large configuration scenario is extracted into multiple levels of configuration command fields (configuration modes).

In some embodiments, the configuration modes are extracted through unsupervised learning in step 203. Because the configuration modes extracted through unsupervised learning can not be guaranteed to be always correct, the extracted configuration modes can be marked and confirmed, and the extracted configuration commands is corrected during the confirmation process. A command in the configuration mode can be defined as one of the following four different properties: mandatory, optional, repeatable, or optional & repeatable. Mandatory means that the command must exist in the configuration mode, that is, it is a default command property. Optional means that the existence or absence of the command does not affect the correctness of the configuration mode. Repeatable means that it is allowed to configure a plurality of said commands. Optional & repeatable means that a plurality of said command is allowed to be configured, and the command can also be omitted. By defining a different property for each command, the flexibility of the configuration modes can be greatly improved. In this way, a corrected configuration scenario data set S2 classified by device types can be obtained. In practical applications, an experienced operation and maintenance expert can manually label and confirm the extracted configuration commands for the correction of the extracted configuration commands, and correct the extracted configuration commands during the confirmation process according to an actual service situation, thereby improving the accuracy of configuration modes.

In some embodiments, the method for constructing a knowledge graph for a network device further includes the following steps.

A mapping relation is established according to configuration commands of the knowledge graph, and thereby obtaining a unified code corresponding to each of the configuration commands.

In practical embodiments, if the configuration commands are directly stored in the process of knowledge graph construction, inconvenience will be caused, and the efficiency of subsequent checking of configurations by using the constructed knowledge graph will be affected. In addition, configuration commands are generally instructions with different lengths and formed of multiple strings, digits, special characters, operators, spaces, etc. In order to facilitate the subsequent checking of the configuration of the network device, each configuration command is mapped to a fixed-length character command as a unified code. Referring to FIG. 9, in an embodiment, a configuration command is mapped to a fixed-length character command, where a left box shows configuration command formats extracted from a configuration scenario, and a right box shows Chinese characters to which the configuration command formats are mapped. Each command entity is uniquely mapped to one Chinese character.

In a practical application, the principle of constructing a knowledge graph is as follows: device types and configuration commands is defined as specific entities according to the obtained configuration scenario data set S2. In an embodiment, an edge "hasScenario" is defined between a device type and a configuration scenario command to indicate that this configuration scenario exists under the device type; an edge "hasCmd" is defined between a configuration scenario command and a main command to indicate that this main command exists in the configuration scenario; an edge "hasSubCmd" is defined between a main command and a subcommand to indicate that this subcommand exists under the main command; and a corresponding command property is added for each command. Therefore, the configuration knowledge graph corresponding to the network device is constructed.

To facilitate the implementation of the preprocessing step in the embodiments of the present disclosure, the embodiments of the present disclosure further provide a configuration data export format in which configuration data is saved in text form, each configuration text only contains configuration data of one network device, a configuration scenario in the configuration text is formed of a plurality of configuration commands that appear in succession, and configuration scenarios are separated from each other by a blank line or a specific identifier. A configuration scenario can include multiple main and auxiliary configuration commands. The relation between the main and auxiliary configuration commands is indicated by a fixed-width indentation or a specific identifier.

At step 204, the configuration knowledge graph of the network device is constructed by associating the extracted configuration commands with the network device and the configuration service scenarios, respectively. Different device types and configuration commands are defined as different entities. Relations between devices and commands and between commands are defined as different edges (relations). The relation between configuration commands in the configuration script is expressed in the form of a triple by using different entities and edges, so as to construct the configuration knowledge graph of the network device.

In some embodiments, the method for checking a network device based on a knowledge graph further includes the following step.

The constructed graph is stored in a local database.

In the method for constructing a knowledge graph for a network device provided in the embodiments of the present disclosure, by acquiring configuration data of a network device, preprocessing the configuration data to obtain a device classification data set, classifying configuration scenarios according to the device classification data set and performing knowledge extraction on the classified configuration scenarios to obtain a configuration scenario data set, and extracting an entity relation of the configuration scenario data set according to a device type and a device role and constructing a knowledge graph according to the entity relation, the knowledge in the constructed knowledge graph is accurate, which can improve the accuracy and efficiency of checking the configuration of the network device.

In the method for constructing a knowledge graph for a network device provided in the embodiments of the present disclosure, by acquiring configuration data of a network device, preprocessing the configuration data to obtain a device classification data set, classifying configuration scenarios according to the device classification data set and performing knowledge extraction on the classified configuration scenarios to obtain a configuration scenario data set, and extracting an entity relation of the configuration scenario data set according to a device type and a device role and constructing a knowledge graph according to the entity relation, the subsequent checking of the configuration of the network device can be facilitated by utilizing the constructed knowledge graph. The knowledge graph constructed by the embodiments of the present disclosure has accurate knowledge and can improve the checking accuracy and efficiency.

An embodiment of the present disclosure further provides a method for checking a network device based on a knowledge graph, which can be applied to a terminal device or a server, or software running in a terminal device or a server. In some embodiments, the terminal device may be a smartphone, a tablet computer, a notebook computer, a desktop computer, a smartwatch, or the like. The server can be configured as an independent physical server, a server cluster or distributed system consisting of a plurality of physical servers, or a cloud server providing basic cloud computing services, such as cloud service, cloud database, cloud computing, cloud function, cloud storage, network service, cloud communication, middleware service, domain name service, security service, content delivery network (CDN), big data, and an artificial intelligence platform. The software can implement the method for checking a network device based on a knowledge graph. However, the present disclosure is not limited to the above forms.

Referring to FIG. 10, a method for checking a network device based on a knowledge graph provided in an embodiment of the present disclosure includes following steps 301 to 304.

At step 301, a to-be-checked configuration script of a network device is hierarchically extracted.

At step 302, a configuration command mapping relation is established according to the extracted to-be-checked configuration script, to obtain a configuration command field.

At step 303, the configuration command field is searched in the knowledge graph to obtain a search result.

At step 304, the network device is checked according to the search result.

The knowledge graph in step 303 is constructed according to the foregoing method for constructing a knowledge graph for a network device.

In some embodiments, after the configuration command is mapped, a hierarchical configuration command field can be obtained, and checked against the constructed configuration knowledge graph. The configuration command field to be checked is searched in the graph based on the association between a scenario command and a main command as well as the association between a main command and a subcommand, so as to check the network device through a search result. If a match is found, it is determined that the configuration command field is correct; otherwise, it is determined that a command error exists in the configuration command field. By the scheme of the present disclosure, abnormal configuration commands can be more accurately identified.

In the method for checking a network device based on a knowledge graph provided in the embodiments of the present disclosure, by hierarchically extracting a to-be-checked configuration script of a network device, establishing a configuration command mapping relation according to the extracted to-be-checked configuration script to obtain a configuration command field, searching the configuration command field in the knowledge graph, and checking the network device according to a search result, it can be determined according to the check result whether the configuration of the network device is abnormal. The technical scheme provided in the embodiments of the present disclosure can take into account the universality and flexibility of configuration checking and realize rapid identification of abnormal configurations, thereby greatly improving the efficiency of checking abnormal configurations, and reducing a lot of labor and time costs for telecommunication operators.

According to the technical scheme provided in the embodiments of the present disclosure, during the configuration anomaly detection process, the network management system or the SDN controller of the network device is used to acquire data related to the device configuration, where the data includes a device type or device role, such that a configuration knowledge graph corresponding to the device can be found accurately, and then a configuration script can be checked.

In practical applications, corresponding identifiers are mapped to obtain a configuration mode set C1 to be checked. Since the device type of the to-be-checked configuration script is known, a corresponding device type can be found in the configuration knowledge graph of the network device that has been constructed, and then the relation indicated by the edge "hasScenario" can be used to obtain a complete configuration mode set D1 under the device type. A dj configuration mode is searched in the configuration mode set D1 for each subset ci in the configuration mode set C1. The search is based on the relations of the edges "hasCmd" and "hasSubCmd". If a corresponding complete configuration command field can be found, it is determined that the configuration of the network device to be checked is normal. If a command that appears in the subset ci does not appear in the dj configuration mode, it is determined that the configuration of the network device to be checked has a redundant configuration. If a mandatory command in the dj configuration mode does not appear in the subset ci and the property of this command is mandatory, it is determined that this mandatory command is missing in the configuration of the network device to be checked.

A commonly used method for detecting a configuration anomaly of a network device is using an inspection tool based on strong rules. Such inspection tools are manually compiled inspection rules for judgment. Such tools are not universal, require constant maintenance of rules, and are inefficient because it takes several hours to inspect devices in a prefecture or municipality using such tools. Compared with the inspection method using an inspection tool based on strong rules, the technical schemes provided in the embodiments of the present disclosure have the advantages of high universality, reduced frequency of rule maintenance, and high inspection efficiency.

Another commonly used method for detecting a configuration anomaly of a network device is using a data mining technology (association analysis, etc.) based on big data statistics. This technology relies on the data volume of samples to be checked, and cannot provide effective inspection for data of a small number of samples. The inspection results are not stable and are interpretable in terms of services. Compared with the data mining technology based on big data statistics, the technical schemes provided in the embodiments of the present disclosure do not need to rely on the data volume of samples to be checked, and can provide effective inspection for data of a small number of samples, with stable inspection results.

In the method for detecting a configuration anomaly of a network device provided in the embodiments of the present disclosure, due to the introduction of the technical idea regarding knowledge graphs, the logical relation of configuration commands is constructed into a configuration knowledge graph corresponding to the network device through the methods of knowledge extraction and knowledge construction (modeling). By establishing the relation between the configuration commands in the form of a graph, the commands can be checked efficiently to detect abnormal configuration commands. It takes several hours for a common inspection tool to inspect the devices of a prefecture or municipality, but the technical schemes provided in the embodiments of the present disclosure allow completion of such a task in a few minutes. Compared with the commonly used deep learning or machine learning methods, the commands in the configuration knowledge graph provided in the embodiments of the present disclosure have service-related logic, which is interpretable for the detected abnormal commands, making the inspection result more credible.

An embodiment of the present disclosure further provides an apparatus for constructing a knowledge graph for a network device, which can implement the method for constructing a knowledge graph for a network device. The apparatus includes the following modules.

A configuration acquisition module is configured to acquire configuration data of a network device.

A preprocessing module is configured to preprocess the configuration data to obtain a device classification data set.

A knowledge extraction module is configured to classify configuration scenarios according to the device classification data set, and perform knowledge extraction on the classified configuration scenarios to obtain a configuration scenario data set.

A knowledge graph construction module is configured to extract an entity relation of the configuration scenario data set according to a device type and a device role, and construct a knowledge graph according to the entity relation.

An embodiment of the present disclosure further provides another apparatus for constructing a knowledge graph for a network device. The apparatus includes: a memory, a processor, and a computer program stored in the memory and executable by the processor which, when executed by the processor, causes the processor to implement steps 201 to 204 in the method shown in FIG. 4 and steps 2021 to 2023 in the method shown in FIG. 5.

An embodiment of the present disclosure further provides an apparatus for checking a network device based on a knowledge graph, which can implement the method for checking a network device based on a knowledge graph. The apparatus includes the following modules.

A hierarchical extraction module is configured to hierarchically extract a to-be-checked configuration script of a network device.

A mapping module is configured to establish a configuration command mapping relation according to the extracted to-be-checked configuration script, to obtain a configuration command field.

A search module is configured to search the configuration command field in the knowledge graph to obtain a search result.

A checking module is configured to check the network device according to the search result.

The knowledge graph is constructed according to the foregoing method for constructing a knowledge graph for a network device.

An embodiment of the present disclosure further provides another apparatus for checking a network device based on a knowledge graph. The apparatus includes: a memory, a processor, and a computer program stored in the memory and executable by the processor which, when executed by the processor, causes the processor to implement steps 301 to 304 in the method shown in FIG. 10.

An embodiment of the present disclosure further provides an electronic device, including:
at least one memory;
at least one processor; and
at least one program,
where the at least one program is stored in the at least one memory which, when executed by the at least one processor, causes the at least one processor to implement the foregoing method for constructing a knowledge graph for a network device or the foregoing method for checking a network device based on a knowledge graph in the present disclosure. The electronic device may be any intelligent terminal including a mobile phone, a tablet computer, a Personal Digital Assistant (PDA), a Point of Sales (POS), a vehicle-mounted computer, etc.

An embodiment of the present disclosure further provides a computer-readable storage medium storing a computer-executable instruction, which is configured to implement the foregoing method for constructing a knowledge graph for a network device or the foregoing method for checking a network device based on a knowledge graph in the present disclosure.

In the method and apparatus for constructing a knowledge graph for a network device, the method and apparatus for checking a network device based on a knowledge graph, the electronic device, and the storage medium provided in the embodiments of the present disclosure, by acquiring configuration data of a network device, preprocessing the configuration data to obtain a device classification data set, classifying configuration scenarios according to the device classification data set and performing knowledge extraction on the classified configuration scenarios to obtain a configuration scenario data set, and extracting an entity relation of the configuration scenario data set according to a device type and a device role and constructing a knowledge graph according to the entity relation, the knowledge in the constructed knowledge graph is accurate, which can improve the accuracy and efficiency of checking the configuration of the network device. Due to the introduction of the technical idea regarding knowledge graphs, the logical relation of configuration commands is constructed into a configuration knowledge graph corresponding to the network device through the methods of knowledge extraction and knowledge construction (modeling). By establishing the relation between the configuration commands in the form of a graph, the commands can be checked efficiently to detect abnormal configuration commands. It takes several hours for a common inspection tool to inspect a prefecture or municipality, but the technical schemes provided in the embodiments of the present disclosure allows completion of such a task in a few minutes. Compared with the commonly used deep learning or machine learning methods, the commands in the configuration knowledge graph provided in the embodiments of the present disclosure have service-related logic, which is interpretable for the detected abnormal commands, making the inspection result more credible.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but are not limited to, the Internet, an intranet, a local area network, a mobile communication network, and combinations thereof.

The embodiments of the present disclosure are provided for the purpose of illustrating the technical schemes of the embodiments of the present disclosure clearly, and do not constitute a limitation on the technical schemes provided in the embodiments of the present disclosure. Those having ordinary skills in the art may know that with the evolution of technologies and the emergence of new application scenarios, the technical schemes provided in the embodiments of the present disclosure are also applicable to similar technical problems.

It may be understood by those having ordinary skills in the art that the method for constructing a knowledge graph for a network device shown in FIG. 4 to FIG. 5 does not constitute a limitation on the embodiments of the present disclosure, and may include more or fewer steps than those shown in the figure, or some steps may be combined, or different steps may be included. The method body for checking a network device based on a knowledge graph shown in FIG. 10 does not constitute a limitation on the embodiments of the present disclosure, and may include more or fewer steps than those shown in the figure, or some steps may be combined, or different steps may be included.

In the method and apparatus for constructing a knowledge graph for a network device, the method and apparatus for checking a network device based on a knowledge graph, and the computer-readable storage medium provided in the embodiments of the present disclosure, by acquiring configuration data of a network device, preprocessing the configuration data to obtain a device classification data set, classifying configuration scenarios according to the device classification data set and performing knowledge extraction on the classified configuration scenarios to obtain a configuration scenario data set, and extracting an entity relation of the configuration scenario data set according to a device type and a device role and constructing a knowledge graph according to the entity relation, the knowledge in the constructed knowledge graph is accurate, which can improve the accuracy and efficiency of checking the configuration of the network device.

The apparatus embodiments described above are merely illustrative. The units described as separate components may or may not be physically separated, i.e., may be located in one place or may be distributed over a plurality of network units. Some or all of the modules may be selected according to actual needs to achieve the objects of the schemes of this embodiment.

Those having ordinary skills in the art can understand that all or some of the steps in the methods disclosed above and the functional modules/units in the system and the apparatus can be implemented as software, firmware, hardware, and appropriate combinations thereof.

In the specification and accompanying drawings of the present disclosure, the terms "first", "second", "third", "fourth", and so on (if any) are intended to distinguish similar objects, and are not necessarily used to describe a specific sequence or a precedence order. It is to be understood that the terms used in such a way are interchangeable in appropriate circumstances, so that the embodiments of the present disclosure described herein can be implemented in an order other than those illustrated or described herein. Moreover, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

It is to be understood that in the present disclosure, "at least one" means one or more and "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b, or c may represent a, b, c, "a and b", "a and c", "b and c", or "a, b, and c", where a, b, and c may be singular or plural.

In the several embodiments provided in the present disclosure, it is to be understood that the disclosed apparatus and method may be implemented in other manners. For example, the described apparatus embodiments are only illustrative. For example, the division of the units is only a logical function division and there may be other divisions during actual implementation. For example, a plurality of units or components may be combined or integrated into another system, or some features may be ignored or not performed. In addition, the shown or discussed couplings or direct couplings or communication connections may be implemented through some interfaces. The indirect couplings or communication connections between the apparatus or units may be implemented in electronic, mechanical, or other forms.

The units described as separate components may or may not be physically separate. Components displayed as units may or may not be physical units, and may be located in one place, or may be distributed over a plurality of network units. Some or all of the units may be selected according to actual needs to achieve the objects of the schemes of this embodiment.

In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the technical schemes of the present disclosure essentially, or the part contributing to the existing technology, or all or some of the technical schemes may be implemented in the form of a software product. The software product is stored in a storage medium, and includes several instructions for instructing a computer device (which may be a personal computer, a server, a network device, or the like) to execute all or some of the steps of the methods described in the embodiments of the present disclosure. The foregoing storage medium includes: any medium that can store program code, such as USB flash drive, removable hard disk, Read-Only Memory (ROM), Random Access Memory (RAM), magnetic disk, or optical disk.

Although some embodiments of the present disclosure are described above with reference to the accompanying drawings, these embodiments are not intended to limit the protection scope of the embodiments of the present disclosure. Any modifications, equivalent replacements and improvements made by those having ordinary skills in the art without departing from the scope and essence of the embodiments of the present disclosure shall fall within the protection scope of the embodiments of the present disclosure.

## Claims

1. A method for constructing a knowledge graph for a network device, comprising:
acquiring configuration data of a network device;
preprocessing the configuration data to obtain a device classification data set;
classifying configuration scenarios according to the device classification data set, and performing knowledge extraction on the classified configuration scenarios to obtain a configuration scenario data set; and
extracting an entity relation of the configuration scenario data set according to a device type and a device role, and constructing a knowledge graph according to the entity relation.

2. The method of claim 1, wherein preprocessing the configuration data to obtain a device classification data set comprises:
classifying the configuration data to obtain a sample data set of device classification;
extracting a standard configuration command from a standard configuration command manual; and
obtaining the device classification data set according to similarities between a configuration command in the sample data set and the standard configuration command.

3. The method of claim 2, wherein obtaining the device classification data set according to similarities between a configuration command in the sample data set and the standard configuration command comprises:
constructing a command parser according to the standard configuration command;
calculating similarities between the configuration command in the sample data set and the standard configuration command of the command parser; and
selecting the standard configuration command with the highest similarity as the device classification data set.

4. The method of claim 1, wherein classifying configuration scenarios according to the device classification data set, and performing knowledge extraction on the classified configuration scenarios to obtain a configuration scenario data set comprises:
classifying the configuration scenarios from the device classification data set according to a preset classification mode to obtain classified configuration scenarios;
performing knowledge extraction on the classified configuration scenarios according to a hierarchical relation to obtain the configuration scenario data set.

5. The method of claim 4, wherein the preset classification mode comprises a preset segmentation method and a preset script rule.

6. The method of any one of claims 1 to 5, further comprising:
establishing a mapping relation according to a plurality of configuration commands of the knowledge graph, and obtaining a unified code corresponding to each of the configuration commands.

7. The method of any one of claims 1 to 5, further comprising:
filtering a plurality of configuration commands of the configuration data.

8. A method for checking a network device based on a knowledge graph, comprising:
hierarchically extracting a to-be-checked configuration script of a network device;
establishing a configuration command mapping relation according to the extracted to-be-checked configuration script, to obtain a configuration command field;
searching the configuration command field in the knowledge graph to obtain a search result; and
checking the network device according to the search result,
wherein the knowledge graph is constructed according to the method of any of claims 1 to 6.

9. An apparatus for constructing a knowledge graph for a network device, comprising:
a configuration acquisition module, configured to acquire configuration data of a network device;
a preprocessing module, configured to preprocess the configuration data to obtain a device classification data set; and
a knowledge extraction module, configured to classify configuration scenarios according to the device classification data set, and perform knowledge extraction on the classified configuration scenarios to obtain a configuration scenario data set; and
a knowledge graph construction module, configured to extract an entity relation of the configuration scenario data set according to a device type and a device role, and construct a knowledge graph according to the entity relation.

10. A computer-readable storage medium storing a computer-executable instruction which, when executed by a computer, causes the computer to perform
the method of any of claims 1 to 7,
or
the method of claim 8.
